# EUROPEAN PATENT APPLICATION

(11) **EP 2 618 336 A2**
(43) Date of publication of application: **24.07.2013**
(21) Application number: 11825487.9
(22) Date of filing: 16.09.2011
(51) Int. Cl.: H01B 5/14, G06F 3/041, H01B 3/02

(54) **TRANSPARENT CONDUCTIVE FILM WITH SUPERIOR VISIBILITY AND METHOD FOR PRODUCING SAME**

(30) Priority: 17.09.2010 KR 20100091978
(71) Applicant: LG Hausys, Ltd., Seoul 150-721 (KR)
(72) Inventor: KIM, In-Sook, Daejeon 302-120 (KR); CHO, Jung, Seoul 137-796 (KR)
(74) Representative: Zacco Denmark A/S
(86) International application number: PCT/KR2011/006890
(87) International publication number: WO 2012/036527

(57) **Abstract**

A transparent conductive film having excellent visibility and a method of manufacturing the same are disclosed. The transparent conductive film having excellent visibility includes a transparent film; an undercoating layer formed on the transparent film; and a conductive layer formed on the undercoating layer, wherein the undercoating layer includes a first low refractive index layer formed of a material having an index of refraction of 1.4 to 1.46 at a lower side of the conductive layer, and a high refractive index layer formed of silicon oxynitride having an index of refraction of 1.7 to 2.0 between the first low refractive index layer and the transparent film.

## Description

The present invention relates to a transparent conductive film used in a projected capacitive type touch panel or the like, and more particularly, to a transparent conductive film having excellent visibility and a method of manufacturing the same.

### [Background Art]

A transparent electrode film is one of the most important components of a touch panel. An indium tin oxide (ITO) film having a total transmittance of 85% or more and a surface resistance of 400 Ω/square or less is most widely used as such a transparent electrode film.

In a general transparent electrode film, a film which is subjected to primer coating and then hard coating for providing a transparent polymer film with surface flatness and thermal resistance is used as a base film.

A transparent undercoating layer is formed on the base film by a wet coating or vacuum sputtering process, and then, a transparent conductive layer, such as an ITO layer, is formed thereon by a sputtering process.

Meanwhile, as a capacitive type touch panel is increasingly used recently, a low surface resistance of 200 Ω/square or less to prevent minor electrostatic current and a transparent conductive film pattern with improved toughness are required.

Visibility of the patterned transparent conductive layer can be improved by reducing a reflectance difference between the transparent conductive layer and an etched portion of the transparent conductive layer. To this end, a conventional transparent conductive layer has an undercoating layer with an appropriate index of refraction provided on a bottom side thereof so as to improve visibility.

As a representative example of a transparent conductive film including an undercoating layer, a transparent conductive film has been suggested which includes a transparent undercoating layer comprised of silicon tin oxide having an index of refraction of 1.7 and silicon oxide (SiO₂) having an index of refraction of 1.4 between a transparent conductive layer and a transparent film.

As another example of a transparent conductive film having an undercoating layer, a transparent conductive film has been suggested which has a transparent undercoating layer consisting of complex oxide of indium oxide-cerium oxide-tin oxide having an index of refraction of 2.3 and silicon oxide (SiO₂) having an index of refraction of 1.4.

However, these transparent conductive films do not provide improvement in visibility, and there is also difficulty in securing a raw material of an undercoating layer.

### [Disclosure]

### [Technical Problem]

An aspect of the present invention is to provide a transparent conductive film capable of improving visibility by changing a material for an undercoating layer.

Another aspect of the present invention is to provide a transparent conductive film capable of improving visibility at low process cost.

### [Technical Solution]

In accordance with one aspect of the present invention, a transparent conductive film having excellent visibility includes a transparent film; an undercoating layer formed on the transparent film; and a conductive layer formed on the undercoating layer, wherein the undercoating layer includes a first low refractive index layer formed of a material having an index of refraction of 1.4 to 1.46 at a lower side of the conductive layer, and a high refractive index layer formed of silicon oxynitride having an index of refraction of 1.7 to 2.0 between the first low refractive index layer and the transparent film.

In accordance with another aspect of the present invention, a method of manufacturing a transparent conductive film having excellent visibility includes: forming a high refractive index layer of silicon oxynitride having an index of refraction of 1.7 to 2.0 on a transparent film; forming a first low refractive index layer of a material having an index of refraction of 1.4 to 1.46 on the high refractive index layer; and forming a conductive layer on the first low refractive index layer, wherein the high refractive index layer and the first low refractive index layer are formed by sputtering or ion plating.

### [Advantageous Effects]

In the transparent conductive film having excellent visibility according to the present invention, a high refractive index layer included in an undercoating layer is formed of silicon oxynitride having an index of refraction of 1.7 to 2.0, thereby improving total transmittance and visibility.

In the transparent conductive film having excellent visibility according to the present invention, an inexpensive material such as silicon, silicon oxide, or the like, is used as a raw material for an undercoating layer instead of expensive metallic material, thereby reducing process costs.

### [Description of Drawings]

Fig. 1 is a schematic sectional view of a transparent conductive film having excellent visibility according to one embodiment of the present invention.
Fig. 2 is a schematic sectional view of a transparent conductive film having excellent visibility according to another embodiment of the present invention.
Fig. 3 is a schematic sectional view of a transparent conductive film having excellent visibility according to a further embodiment of the present invention.
Fig. 4 schematically illustrates a method of manufacturing a transparent conductive film having excellent visibility according to one embodiment of the present invention.

### [Best Mode]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are given to provide complete disclosure of the invention and a thorough understanding of the invention to those skilled in the art. The scope of the invention is defined only by the claims.

Like reference numerals indicate like elements throughout the specification and drawings.

Now, a transparent conductive film having excellent visibility and a method of manufacturing the same according to the present invention will be described in detail with reference to the accompanying drawings.

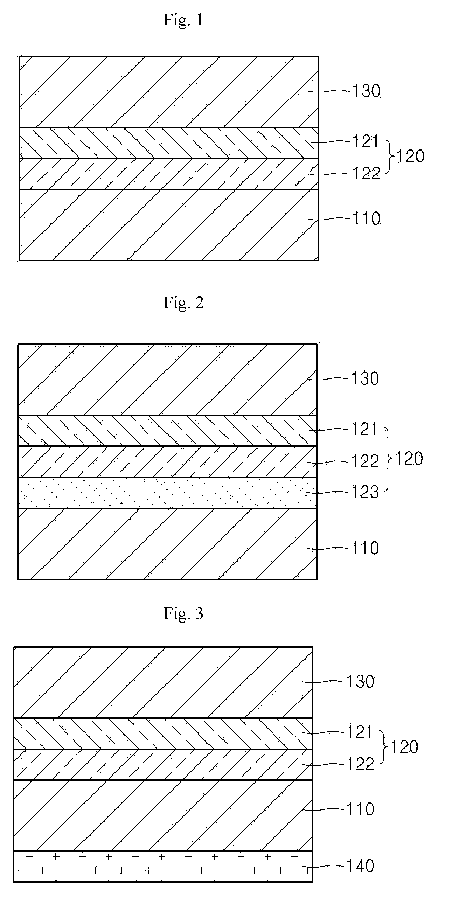

Fig. 1 is a schematic sectional view of a transparent conductive film having excellent visibility according to an embodiment of the present invention.

Referring to Fig. 1, the illustrated transparent conductive film includes a transparent film 110, an undercoating layer 120, and the conductive layer 130.

The transparent film 110 includes a film having excellent transparency and strength. A material of such a transparent film 110 includes PET (polyethylene terephthalate), PEN (polyethylenenaphthalate), PES (polyethersulfone), PC (Poly carbonate), PP (poly propylene), norbornene resins, and the like, which may be used alone or in combination of two or more thereof. In addition, the transparent film 110 may have a single- or multi-layer structure.

The undercoating layer 120 serves to improve insulating properties and transmittance between the transparent film 110 and the conductive layer 130.

In the present invention, the undercoating layer 120 is formed to have two or more layers having different indexes of refraction. More specifically, the undercoating layer 120 has a low refractive index layer 121 (hereinafter, referred to as the first low refractive index layer) formed of a material having an index of refraction of 1.4 to 1.46 and a high refractive index layer 122 having an index of refraction of 1.7 to 2.0.

When the conductive layer 130 has an index of refraction of about 1.9 to 2.0, difference in index of refraction between the respective layers should not be too large or too small in order to reduce reflectance. It is desirable that the first low refractive index layer 121 is formed adjacent to the conductive layer 130 and the high refractive index layer 122 is formed between the first low refractive index layer 121 and the transparent film 110.

Here, in the present invention, the high refractive index layer 122 is formed of silicon oxynitride, which makes it possible to control the index of refraction between 1.7 and 2.0 and to improve overall visibility and total transmittance of the transparent conductive film.

A mole fraction of nitrogen N may be higher than that of oxygen O in the silicon oxynitride. When the mole fraction of nitrogen N is higher than that of oxygen O in the silicon oxynitride, the index of refraction increases, so that the visibility can be significantly improved.

Meanwhile, the first low refractive index layer 121 may be formed of silicon oxide (SiO₂) having an index of refraction of 1.4.

In the undercoating layer 120, the total thickness of the first refractive index layer 121 and the high refractive index layer 122 may range from 10 to 100 nm. If the undercoating layer 120 has a thickness of more than 100 nm, film stress becomes severe resulting in cracking, and the total transmittance may be degraded. On the contrary, if the undercoating layer 120 is too thin, i.e. a thickness of less than 10 nm, there is a problem in that transmittance and visibility are insufficient.

The conductive layer 130 is formed on the undercoating layer 120.

Such a conductive layer 130 may be formed of ITO (indium tin oxide), FTO (fluorine-doped tin oxide), or the like, which has excellent transparency and conductivity.

Fig. 2 is a schematic sectional view of a transparent conductive film having excellent visibility according to another embodiment of the present invention.

Referring to Fig. 2, the transparent conductive film includes a transparent film 110, an undercoating layer 120, and a conductive layer 130, wherein the undercoating layer 120 includes a first low refractive index layer 121, a high refractive index layer 122, and a second low refractive index layer 123.

In Fig. 2, since the transparent film 110, the first low refractive index layer 121 and the high refractive index layer 122 of the undercoating layer 120, and the conductive layer 130 are the same as those shown in Fig. 1, detailed description thereof will be omitted.

The second low refractive index layer 123, which is further included in the undercoating layer 120, is formed between the high refractive index layer 122 and the transparent film 110.

Such a second low refractive index layer 123 reduces reflectance difference between the high refractive index layer 122 and the transparent film 110 and increases total transmittance, thereby improving visibility while preventing transmission of moisture, oligomer and the like between the transparent film 110 and the high refractive index layer.

Like the first low refractive index layer 121, the second low refractive index layer 123 may also be formed of a material having an index of refraction of 1.4 to 1.46 such as SiO₂.

Although the thickness of the second low refractive index layer 123 is not specifically limited, the second low refractive index layer may have a thickness of 40 nm or less, for example from 1 to 40 nm. This is because when the second low refractive index layer 123 has a thickness of more than 40 nm, process costs can be increased without further visibility improvement.

Fig. 3 is a schematic sectional view of a transparent conductive film having excellent visibility according to a further embodiment of the present invention.

Referring to Fig. 3, the illustrated transparent conductive film includes a transparent film 110, an undercoating layer 120, a conductive layer 130, and a hard coating layer 140.

In Fig. 3, since the transparent film 110, the undercoating layer 120 and the conductive layer 130 are the same as those shown in Fig. 1, detailed descriptions thereof will be omitted.

In Fig. 3, the hard coating layer 140 is further formed at a lower side of the transparent film 110. The hard coating layer 140 serves to improve surface hardness and may be formed of any material such as acrylic compounds without limitation as long as the material is used to form a hard coating.

As shown in Fig. 3, the hard coating layer 140 may be formed only on one side of the transparent film 110, or alternatively, on both sides of the transparent film 110.

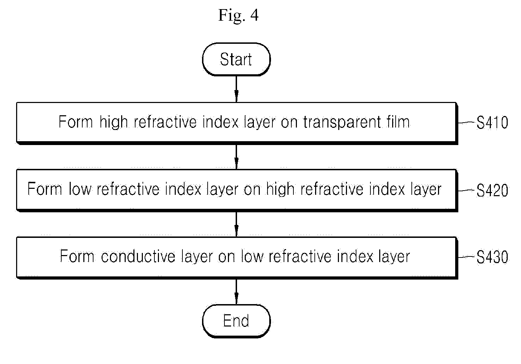

Fig. 4 schematically illustrates a method of manufacturing a transparent conductive film having excellent visibility according to one embodiment of the present invention.

Referring to Fig. 4, the method of manufacturing a transparent conductive film includes: forming a high refractive index layer (S410); forming a first low refractive index layer (S420); and forming a conductive layer (S430).

The method of manufacturing a transparent conductive film illustrated in Fig. 4 is used to manufacture a transparent conductive film having the structure as shown in Fig. 1, and like components will be denoted by like reference numerals of Fig. 1 in description of the method shown in Fig. 4.

In operation of forming a high refractive index layer (S410), the high refractive index layer 122 is formed of silicon oxynitride having an index of refraction of 1.7 to 2.0 on a transparent film 110 by sputtering or ion plating.

More specifically, the high refractive index layer 122 may be formed by DC reactive sputtering using a Si target and using oxygen (O₂) and nitrogen (N₂) as reactive gases.

In this case, nitrogen (N₂) may be supplied at a partial pressure than oxygen (O₂) to increase the mole fraction of nitrogen in silicon oxynitride to be formed, thereby further improving total transmittance and visibility.

In operation of forming a first low refractive index layer (S420), the first low refractive index layer 121 is formed of a material having an index of refraction of 1.4 to 1.46 on the high refractive index layer 122 by sputtering or ion plating.

More specifically, the first low refractive index layer 121 may be formed by DC reactive sputtering using a SiO₂ target.

Here, as mentioned above, the high refractive index layer 122 and the first low refractive index layer 121 may have a total thickness of 10 nm to 100 nm.

In operation of forming a conductive layer (S430), the conductive layer 130 is formed of ITO or FTO on the first low refractive index layer 121. More specifically, the conductive layer 130 may be formed by DC reactive sputtering using an ITO target.

As shown in Fig. 2, before the high refractive index layer 122 is formed, a second low refractive index layer 123 (Fig. 2) may be further formed of a material having an index of refraction of 1.4 to 1.46 (for example, SiO₂) on the transparent film 110. As described above, the second low refractive index layer 123 may have a thickness of 40 nm or less.

Also, as shown in Fig. 3, in order to improve surface hardness, a hard coating layer 140 (Fig. 3) may be further formed of an acrylic compound on one or both sides of the transparent film 110.

The hard coating layer 140 may be formed on one side of the transparent film 110, on which the high refractive index layer 122 or the like is not formed, or both sides thereof, or is formed only at a lower side of the transparent film 110 on which the high refractive index layer 122 or the like is formed.

As described above, the transparent conductive film having excellent visibility according to the present invention includes the undercoating layer, which is formed between the transparent film and the conductive layer and is comprised of the low refractive index layer having an index of refraction of 1.4 to 1.46 and the high refractive index layer having an index of refraction of 1.7 to 2.0, wherein the high refractive index layer is formed of silicon oxynitride, whereby the transparent conductive film may have excellent total transmittance and visibility. Thus, an external appearance of the film can be improved and usefully employed in a projected capacitive type touch panel and the like.

Also, since the undercoating layer may be formed by sputtering using silicon (Si), silicon oxide (SiO₂), or the like, which can be easily obtained in the art, it is possible to reduce manufacturing costs of the transparent conductive film.

### <Experimental Example - Visibility Evaluation of Transparent Conductive Film>

### [Example 1]

A silicon oxynitride film was formed on one side of a PET film having a thickness of 125 µm, on both sides of which acrylic hard coating layers were formed, by reactive sputtering. In this case, the reactive gas consisted of 60% nitrogen and 40% oxygen, and the silicon oxynitride film had an index of refraction of 1.71 and a thickness of 40 nm. Then, a 20 nm thick silicon oxide film having an index of refraction of 1.47 was formed as a first refractive index layer by reactive sputtering. After heat treatment of the silicon oxide film, a 20 nm thick ITO layer having an index of refraction of 1.95 was formed thereon to manufacture a transparent conductive film, followed by visibility evaluation.

### [Example 2]

A high refractive index layer having a thickness of 35 nm was formed on the same hard coated PET film as Example 1 using a reactive gas consisting of 80% nitrogen and 20% oxygen. Then, a first refractive index layer and a conductive layer were formed in the same manner as Example 1 to manufacture a transparent conductive film, followed by visibility evaluation.

### [Example 3]

A conductive film was manufactured in the same manner as in Example 1, except that a 20 nm thick second refractive index layer having an index of refraction of 1.4 was further formed of silicon oxide by reactive sputtering between a hard coated PET film and a high refractive index layer which were identical to those of Example 1. Next, visibility evaluation of the conductive film was performed.

### [Comparative Example 1]

A conductive film was manufactured to have a two-layered structure of the first refractive index layer and the conductive layer by omitting the high refractive index layer from the conductive film of Example 1, followed by visibility evaluation.

### [Comparative Example 2]

A conductive film was manufactured in the same manner as Example 1, except that a high refractive silicon nitride layer was formed on one side of the hard coated PET film of Example 1 by reactive sputtering. Then, visibility evaluation of the conductive film was performed.

### [Comparative Example 3]

A silicon oxynitride film was formed on one side of a PET film having a thickness of 125 µm, on both sides of which acrylic hard coating layers were formed, by reactive sputtering. In this case, the reactive gas consisted of 20% nitrogen and 80% oxygen, and the silicon oxynitride film had an index of refraction of 1.71 and a thickness of 40 nm. Then, a 20 nm thick silicon oxide film having an index of refraction of 1.47 was formed as a first refractive index layer by reactive sputtering. After heat treatment of the silicon oxide film, a 20 nm thick ITO layer having an index of refraction of 1.95 was formed to manufacture a transparent conductive film, followed by visibility evaluation.

### [Comparative Example 4]

A 35 nm thick high refractive index layer was formed on the same hard coated PET film as Comparative Example 3 using a reactive gas consisting of 40% nitrogen and 60% oxygen. Then, a first refractive index layer and a conductive layer were formed in the same manner as in Example 1, thereby manufacturing a conductive film.

### [Comparative Example 5]

A high refractive index layer having a thickness of 35 nm was formed on the same hard coated PET film as Comparative Example 3 using a reactive gas consisting of 50% nitrogen and 50% oxygen. Then, a first refractive index layer and a conductive layer were formed in the same manner as in Example 1, thereby manufacturing a conductive film.

### [Comparative Example 6]

A conductive film was manufactured in the same manner as in Example 1, except that a second refractive index layer having an index of refraction of 1.4 and a thickness of 40 nm was formed of silicon oxynitride by reactive sputtering between a hard coated PET film and a high refractive index layer which were identical to those of Example 1.

### [Comparative Example 7]

A conductive film was manufactured in the same manner as in Example 1, except that a second refractive index layer having an index of refraction of 1.5 and a thickness of 40 nm was formed of silicon oxide by reactive sputtering between a hard coated PET film and a high refractive index layer which were identical to those of Example 1.

### [Comparative Example 8]

A conductive film was manufactured in the same manner as in Example 1, except that a second refractive index layer having an index of refraction of 1.4 and a thickness of 50 nm was formed of silicon oxide by reactive sputtering between a hard coated PET film and a high refractive index layer which were identical to those of Example 1.

### <Experimental Results >

Table 1 shows evaluation results as to the total transmittance of the transparent conductive films of the examples and the comparative examples and whether the etched patterns of the ITO layers could be identified with the naked eye.

**Table 1**

| | First Refractive index layer | High Refractive index layer | Second Refractive index layer | High Refractive index layer Silicon Oxynitride Content O2:N2 (%) | Total Transmittance (%) | Visibility Evaluation |
|---|---|---|---|---|---|---|
| Ex. 1 | Presence | Presence | Absence | 40:60 | 91.5 | O |
| Ex. 2 | Presence | Presence | Absence | 20:80 | 91 | O |
| Ex. 3 | Presence | Presence | Presence | 40:60 | 92 | O |
| Comp. Ex. 1 | Presence | Absence | Absence | 0:0 | 87.5 | X |
| Comp. Ex. 2 | Presence | Presence | Absence | 0:100 | 87 | X |
| Comp. Ex. 3 | Presence | Presence | Absence | 80:20 | 89 | Δ |
| Comp. Ex. 4 | Presence | Presence | Absence | 60:40 | 89 | Δ |
| Comp. Ex. 5 | Presence | Presence | Absence | 50:50 | 90 | Δ |
| Comp. Ex. 6 | Presence | Presence | Presence | 40:60 | 88 | X |
| Comp. Ex. 7 | Presence | Presence | Presence | 40:60 | 88.5 | X |
| Comp. Ex. 8 | Presence | Presence | Presence | 40:60 | 88 | X |

| | | | | | | |
|---|---|---|---|---|---|---|
| Presence: Layer exists, Absence: Layer is absent O: Excellent Visibility, Δ: Normal Visibility, X: Insufficient Visibility | | | | | | |

In Example 1, only the conductive layer of the conductive film, which was subjected to heat treatment at 150°C for 1 hour, was partially etched to form a pattern, and then, visibility of the pattern was evaluated with naked eye. It was confirmed from the results of the evaluation that it is difficult to identify the pattern with the naked eye. In Example 2, an external appearance evaluation result at the same level as Example 1 was also obtained.

In addition, referring to Table 1, when the high refractive index layer of the undercoating layer was formed of silicon oxynitride, excellent visibility was obtained. Particularly, when a fraction of nitrogen was higher than that of oxygen, the total transmittance was increased by about 2%, and thus it could be seen that the visibility was significantly improved.

Particularly, in Example 3 in which the second refractive index layer was added, as compared with Examples 1 and 2, it was more difficult to identify the pattern with the naked eye. Thus, the second refractive index layer having certain requirements was added, so that excellent visibility of the transparent conductive film was confirmed.

However, as a result of external appearance evaluation of the conductive film manufactured in Comparative Example 1, the ITO pattern was readily identified with the naked eye. Also, when the high refractive index layer was formed of silicon nitride through Comparative Example 2, it could be seen that the total transmittance was lowered.

In Comparative Examples 3 to 5, the visibility was measured as a normal value due to reduction in total transmittance as compared with Examples 1 and 2. Thus, it was seen that the total transmittance and visibility were advantageously improved with increasing partial pressure or mole fraction of nitrogen above the partial pressure or mole fraction of oxygen in silicon oxynitride.

In addition, when the silicon oxide layer was not formed or had undesired values departing from predetermined ranges of index of refraction and thickness even when the second refractive index layer was included as in Comparative Examples 6 to 8, it could be seen that the ITO pattern could be clearly identified and visibility was insufficient upon external appearance evaluation.

Although some embodiments have been described, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

## Claims

1. A transparent conductive film, comprising:
a transparent film;
an undercoating layer formed on the transparent film; and
a conductive layer formed on the undercoating layer,
wherein the undercoating layer comprises a first low refractive index layer formed of a material having an index of refraction of 1.4 to 1.46 at a lower side of the conductive layer, and a high refractive index layer formed of silicon oxynitride having an index of refraction of 1.7 to 2.0 between the first low refractive index layer and the transparent film.

2. The transparent conductive film according to claim 1, wherein a mole fraction of nitrogen is higher than that of oxygen in the silicon oxynitride.

3. The transparent conductive film according to claim 1, wherein the first low refractive index layer is formed of silicon oxide (SiO₂).

4. The transparent conductive film according to claim 1, wherein the undercoating layer has a thickness of 10 nm to 100 nm.

5. The transparent conductive film according to claim 1, wherein the undercoating layer further comprises a second low refractive index layer formed of a material having an index of refraction of 1.4 to 1.46 between the high refractive index layer and the transparent film.

6. The transparent conductive film according to claim 5, wherein the second low refractive index layer has a thickness of 1 to 40 nm.

7. The transparent conductive film according to claim 1, wherein the transparent film is a single- or multi-layered film comprising at least one selected from among PET (polyethylene terephthalate), PEN (polyethylene naphthalate), PES (polyethersulfone), PC (Poly carbonate), PP (poly propylene), and norbornene-based resin.

8. The transparent conductive film according to claim 1, wherein the conductive layer is formed of ITO (indium tin oxide) or FTO (fluorine-doped tin oxide).

9. The transparent conductive film according to claim 1, further comprising: a hard coating layer formed on one or both sides of the transparent film.

10. A method of manufacturing a transparent conductive film, comprising:
forming a high refractive index layer of silicon oxynitride having an index of refraction of 1.7 to 2.0 on a transparent film;
forming a first low refractive index layer of a material having an index of refraction of 1.4 to 1.46 on the high refractive index layer; and
forming a conductive layer on the first low refractive index layer,
wherein the high refractive index layer and the first low refractive index layer are formed by sputtering or ion plating.

11. The method according to claim 10, wherein the high refractive index layer is formed by DC reactive sputtering using a silicon (Si) target and using oxygen (O₂) and nitrogen (N₂) as reactive gases, a partial pressure of the nitrogen being higher than that of the oxygen.

12. The method according to claim 10, wherein the first low refractive index layer is formed by DC reactive sputtering using an SiO₂ target.

13. The method according to claim 10, wherein the high refractive index layer and the first low refractive index layer are formed to a total thickness of 10 nm to 100 nm.

14. The method according to claim 10, wherein, before forming the high refractive index layer, a second low refractive index layer is further formed of a material having an index of refraction of 1.4 to 1.46 on the transparent film.

15. The method according to claim 14, wherein the second low refractive index layer is formed to a thickness of 1 nm to 40 nm.

16. The method according to claim 10, wherein the conductive layer is formed by DC reactive sputtering using an ITO target.

17. The method according to claim 10, wherein a hard coating layer is further formed on one or both sides of the transparent film.
